# EUROPEAN PATENT APPLICATION

(11) **EP 2 189 574 A1**
(43) Date of publication of application: **26.05.2010**
(21) Application number: 08169403.6
(22) Date of filing: 19.11.2008
(51) Int. Cl.: E02B 17/00, B66C 23/52, B66C 23/76

(54) **Jack-up offshore platform and its use for assembling and servicing a structure at sea**

(71) Applicant: GeoSea NV, 2070 Zwijndrecht (BE)
(72) Inventor: Vandenbulcke, Luc, 2000 Antwerpen 1 (BE); Vanderbeke, Koen, 3071 Erps-Kwerps (BE)
(74) Representative: Brouwer, Hendrik Rogier

(57) **Abstract**

The invention relates to a jack-up offshore platform (1), comprising a work deck (2) and a lifting device (10) for manipulating a load (55) from the work deck (2). The lifting device (10) comprises a main boom (14) for manipulating the load (55), which main boom (14) is pivotally connected to support means (20) at pivot (13a). The support means (20) are provided to support the pivot (13a) in an elevated position with respect to the work deck (2), which allows to manipulate heavier loads and moreover saves space on the work deck. In a preferred embodiment, the platform further comprises counterbalancing means (24) that are connectable to the platform (1) and/or the support means (20). The invention also relates to the use of the platform for assembling and servicing a structure (50) at sea.

## Description

The invention relates to a jack-up offshore platform, on which is provided a lifting device for manipulating a load. The invention also relates to the use of the jack-up offshore platform for assembling and servicing structures at sea, in particular a wind turbine.

There is an increasing amount of large structures at sea that have to be serviced and repaired. A typical example is an offshore wind turbine, which comprises a nacelle supported by a tower of more than 100 meters high above sea level. A hub is connected to the nacelle for holding rotor blades, which can have a length of 70 meters and more. The nacelle alone typically accounts for 350 tons in weight. When assembling, servicing or repairing such large structures at sea, parts of the structure are generally transported to a jack-up offshore platform close to the structure, on which platform is provided a lifting crane for lifting the parts. Lifting cranes tend to become larger and larger to accommodate the ever increasing dimensions of the large structures. As structures become higher and larger, the required lifting cranes and counterweights become increasingly heavy, which consequentially also requires sturdier platforms. The lifting cranes, including their counterweights moreover tend to take up more and more workspace from the jack-up offshore platform. Transporting large cranes and counterweights is also increasingly demanding and costly.

It is an object of the present invention to provide an improved jack-up offshore platform for assembling or servicing large and high structures at sea.

According to the invention, this object is achieved by a jack-up offshore platform, comprising a work deck and a lifting device for lifting a load from the work deck, the lifting device comprising a main boom for manipulating the load, which main boom is pivotally connected to support means at a pivot, the support means being provided to bring the pivot in an elevated position with respect to the work deck. By providing support means that bring the pivot in an elevated position with respect to the platform, the lifting device cannot only reach increased heights but is also able to support more load. Indeed, its booms can be designed smaller for a given height, which makes these booms stronger.

A further advantage of the platform according to the invention is that its lifting device has a reduced working radius for a given reachable height compared to the known lifting crane, which is supported by the work deck of the jack-up platform directly. An additional advantage of the jack-up offshore platform according to the invention is that its lifting device takes up less space of the jack-up offshore platform, in rest and in operation, and makes assembling or servicing structures at sea less expensive and easier to perform.

By providing support means for bringing the pivot of the main boom in an elevated position with respect to the work deck of the platform, any serviceable height as required by the circumstances can in principle be reached. In a preferred embodiment, the jack-up offshore platform is **characterized in that** the elevated position is at least 10 m above the platform, even more preferred at least 20 m above the platform, and most preferred at least 30 m above the work deck of the platform. It has turned out that the support means in such preferred embodiments in particular provide additional stability to the lifting device.

In another preferred embodiment of the jack-up offshore platform according to the invention, the height of the elevated position above the work deck of the platform ranges from 20 to 80% of the total height of the lifting device in its highest position. This embodiment provides an optimum between the possibility to reach high altitudes and the strength of the lifting device. Even more preferred is a jack-up platform for which the height of the elevated position above the work deck of the platform ranges from 30 to 70 % of the total height of the lifting device in its highest position. Most preferred is a jack-up platform for which the height of the elevated position above the work deck of the platform ranges from 40 to 60 % of the total height of the lifting device in its highest position.

The support means of the invention may be movable or static. In a preferred embodiment of the jack-up platform according to the invention, the support means comprise a static support structure, that is, more preferably, positioned on the work deck of the platform. Such an embodiment of the lifting device is stable, strong and cost effective.

A very suitable jack-up offshore platform according to the invention is **characterized in that** the support structure comprises a truss framework. Truss frameworks are light, and can be designed and assembled easily in accordance with the requirements.

In another preferred embodiment, the jack-up offshore platform according to the invention is **characterized in that** the lifting device comprises counterbalancing means that are connectable to the platform and/or the support means. When manipulating a load, the counterbalancing means are connected to the jack-up platform and/or the support means. As a result, at least a part of the force carried by the counterbalancing means is transferred to the jack-up offshore platform, eventually through the support means, and the counterweight needed to counterbalance the load can be reduced compared to the state of the art, or even deleted altogether. Alternatively, a larger load can be lifted relative to the state of the art platform and crane. A preferred counterbalancing means comprise at least one counterbalancing cable attached to the lifting device, and preferably to the main boom (or booms) thereof, and connectable to the platform and/or support structure.

In yet another preferred embodiment, the counterbalancing means are connectable to the jack-up offshore platform and/or the support structure at at least two spaced apart connection positions. This allows to use the lifting device in at least two different positions. For example, with the main boom of the lifting device in a first position, a load can be lifted from a cargo ship onto a particular location of the platform, and, with the main boom of the lifting device in a second position, the load can be repositioned to the structure at sea. In a simple, yet adequate embodiment, the counterbalancing means are connectable to the platform and/or the support structure at two spaced apart connection positions. When servicing or assembling a structure at sea, such as a wind turbine, the lifting device usually lifts parts from a first location, for example from a cargo ship or from the jack-up offshore platform, and positions the load at the preferred location of the structure. When these locations are at a substantial distance from each other, two spaced apart connection positions allow for effective use of the counterbalancing cables, whereas even more limited workspace of the jack-up offshore platform is used. Preferably, the counterbalancing means are connectable to the platform nearby edges of the jack-up offshore platform. This saves even more workspace, as edges are usually not part of the workspace, or at least not used extensively.

In still another preferred embodiment, the counterbalancing means are movably connectable to the jack-up offshore platform. To establish such a movable connection between the counterbalancing means and the platform, the jack-up offshore platform may for instance comprise a guide, such as a cable-guide or a bar-guide, fixed to the platform. The first connection means may for instance be provided in the form of a hook that is connected to the cable-guide or bar-guide and will slide along the cable-guide or bar-guide when moving the lifting crane. A person skilled in the art may envisage other solutions to such a movable connection. The present embodiment does not demand or demands less connecting and disconnecting of the counterbalancing means during the use of the lifting crane. When moving the lifting crane, the connection between the counterbalancing means and the jack-up offshore platform can move relative to the platform, whereby the counterbalancing means can be used over a wider range of positions of the lifting crane.

Although the off-shore jack-up platform, and in particular the lifting device according to the invention does not need a counterweight, a preferred embodiment of the lifting device comprises, in addition to the counterbalancing means, a counterweight, supported by the lifting device. Such a lifting device is able to move and rotate its main boom in its unconnected state (when it is not connected to the platform) in a number of stable configurations, eventually carrying a relatively small load. The counterweight of the present embodiment will typically be smaller than the counterweight of the known lifting crane, and therefore still saves weight and workspace. Preferably, the distance between the counterweight and the lifted load is adjustable. This results in a more flexible lifting device, as the counterbalancing couple exerted by the counterweight about lifted load can be adjusted, resulting in easy repositioning of loads. It is particularly preferred to minimize the distance between the lifted load and the counterweight before disconnecting the counterbalancing means from the platform, since this provides stability to the lifting device.

The lifting device of the jack-up platform according to the invention preferably comprises at least one sensor for detecting forces, and control means for counterbalancing the load such that the lifting device remains in equilibrium on the basis of the outcome of the detected forces. The detected forces for a certain load can be influenced by changing the position of the lifting device and/or by tightening or loosening the counteracting cable, and/or eventually also by tightening or loosening other cables provided between different parts of the lifting device. The sensors and control means may also be used to find an equilibrium position of the device in which the force in the counterbalancing means is about zero. If the detected force in the counterbalancing cable for instance is below a predetermined low value, the counterbalancing cable may be disconnected from the platform without the lifting device loosing its equilibrium. This allows to safely reposition the lifting device to another position. On the other hand, the sensors and control means may also be used to limit the stress in the counteracting cable to below a certain yield stress, in order to prevent fracture of the cable. The control means may also provide a signal, for example a sound or a light signal, to inform the user when a certain predetermined stress level is exceeded.

The lifting device of the jack-up platform according to the invention is able to lift loads higher than the known platform lifting crane. The lifting device of the jack-up platform is particularly useful for lifting loads to a height between 50 and 150 meter, preferably between 60 and 130 meter and most preferably between 70 and 110 meter above the work deck of the jack-up offshore platform.

The jack-up offshore platform according to the invention allows for supporting a lifting device without a counterweight, and thus can be designed smaller or may provide an increased workspace of the jack-up offshore platform.

The invention finally relates to the use of a jack-up offshore platform according to the invention for assembling and servicing structures at sea. Especially when transport of a lifting device is needed, the invention is advantageous, as no or at least a smaller counterweight is needed. In particular assembling high structures, such as wind turbines, and/or heavy structures can be performed more easily with the jack-up offshore platform according to the invention.

The invention will now be explained in more detail with reference to the drawings, without however being limited thereto and wherein:
Fig. 1 schematically shows an embodiment of the jack-up offshore platform according to the invention in side view; and
Fig. 2 schematically shows the jack-up offshore platform of figure 2 during transport.

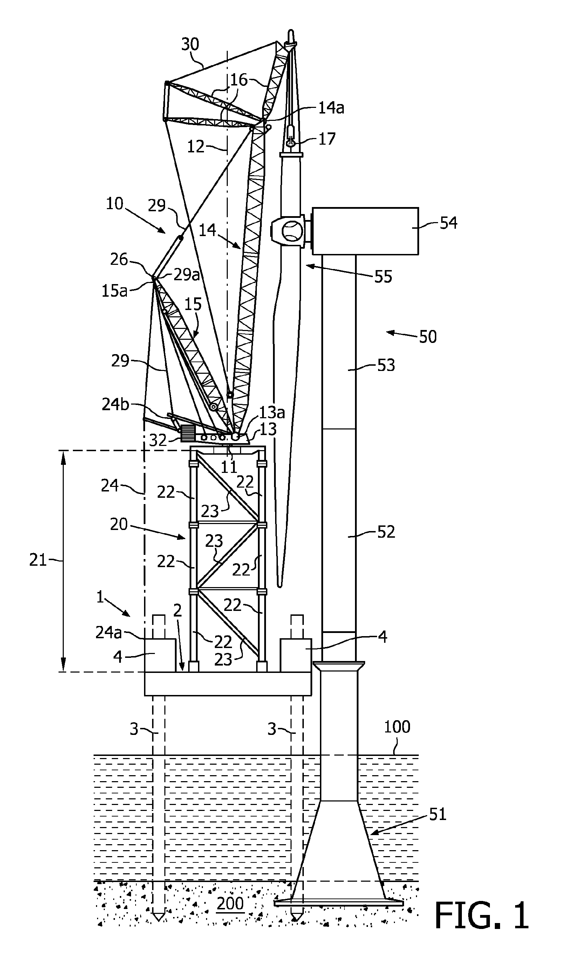

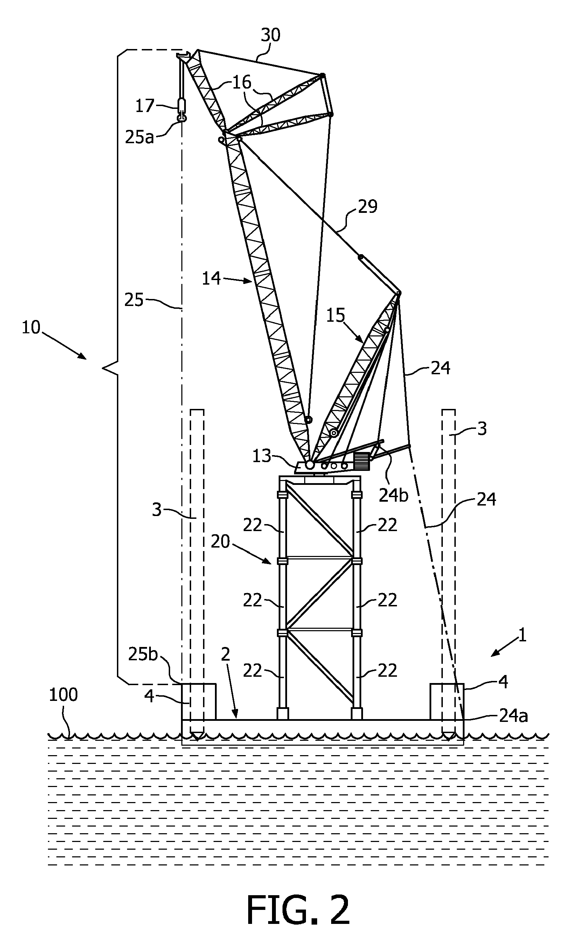

Referring to figure 1, a j ack-up offshore platform 1 according to the invention is shown in an anchored position at a servicing site. The platform 1 comprises a work deck 2 for carrying a substantial load (typically 1000 tons and more), and is provided with legs 3 that support the work deck 2. Each of the legs 3 stand substantially upright and is movable in that direction from an upper position during transport (shown in figure 2) to a lower position when in anchored position (shown in figure 1), where it takes support onto the sea bottom 200. The height position of the work deck 2 relative to the water level 100 can be changed by fixating it relative to the legs 3 by pushing pistons 4. In figure 1, platform 1 is anchored at sea close to a structure to be assembled, i.e. a semi-finished wind turbine 50, which is anchored in the sea bottom 200 by foundation 51. Wind turbine 50 comprises foundation 51, two tower sections (52, 53) and a nacelle 54. In figure 1, tower sections (52, 53) and nacelle 54 have already been lifted and placed into position by a lifting device 10, provided on the platform 1. Platform 1 comprises a lifting device 10, built up of basically two parts. The first part comprises a structure that is pivotal around pivot point 13a and at least comprises a main boom 14 for manipulating the load, which in figure 1 is the rotor 55 of wind turbine 50. A turntable 11 is provided for at least main boom 14, allowing for rotation of the main lifting boom 14 relative to the jack-up offshore platform 1 about a vertical axis 12. The lifting device 10 further comprises a frame 13, that pivotally supports the main boom 14, and a second boom 15, around pivot 13a. In the embodiment shown, additional booms 16 are pivotally supported at the top section 14a of main boom 14. All booms are interconnected by cables (24, 29). The rotor 55 is connected to holding means 17 of lifting device 10.

According to the invention, the first part of the lifting device that at least includes main boom 14 is pivotally connected through frame 13 to a second part of the lifting device 10, being support means in the form of a static truss framework 20. Framework 20 not only supports the first part - booms (14, 15) - of the lifting device 10 but is also provided to bring the pivot 13a in an elevated position with respect to platform 1, and in particular work deck 2 thereof. In the embodiment shown in figure 1, the elevated position of the pivot 13a above work deck 2 is defined by the height 21 of the truss framework 20, which is around 40 m in the example shown. In principle any height 21 above work deck 2 can be contemplated. It has advantages when the height 21 of the support means 20 ranges between 20 and 80 % of the total height of lifting device 10 in its highest position, more preferably between 30 and 70 %, and most preferably between 40 and 60 %. For a typical wind turbine of more than 100 meters high above sea level, and rotor blades of 70 m in diameter, this would represent a maximum height to be lifted of about 135 m, and therefore a preferred height range 21 of between 27 and 108 m, and most preferred between 54 and 81 m.

The truss members 22 and cross members 23 of truss network 20 should have a sufficient cross-section to accommodate the design forces in operation, which for the embodiment shown are of the order of 450 tons per truss or more. Truss network 20 may be static, i.e. substantially permanently connected to platform 1, or may be made dynamic, i.e. by providing its lower members 22 with wheels for instance. The cross-section of the truss network may be adapted to the particular requirements The sides of truss network 20 measure around 12 m, with main boom 14 having a length of about 56 m. The lifting device 10 of the invention saves considerable space on the work deck 2, since it does not comprise many moving members on work deck level. The truss structure moreover is spacious in itself. By providing the pivot 13a well above work deck level, the lifting angle is actually reduced with respect to the typical lifting angle of the lifting crane of the state of the art, which leads to an increased working radius. The lifting angle is defined as the angle between the longitudinal axis of main boom 14 and the horizontal direction.

In the embodiment shown, lifting device 10 comprises counterbalancing means in the form of counterbalancing cable 24 that are connectable to the platform. It is also possible to provide counterbalancing means that are connectable to support means 20. Counterbalancing cable 24 is at its first end 24a connected to jack-up offshore platform 1, nearby an edge thereof. Cable 24 is guided over a pulley 26, fixed to the top 15a of the second boom 15 and connected to frame 13 of lifting device 10 at a second end 24b of cable 24. At this end, a force sensor (not shown) is provided. Control cables 29 and 30 are provided to manipulate the relative positions of booms (14, 15, 16). In addition, lifting device 10 comprises a counterweight 32, which is movably connected to frame 13, so as to allow a substantially horizontal displacement of counterweight 32 to and fro from pivot 13a of main boom 14. Preferably, counterbalancing cable 24 and/or control cables (29, 30) are provided with force sensors (not shown), connected to a control system, which controls winches (not shown) for altering the length of cables (24, 29, 30) as a result of the level of the detected forces.

When manipulating a load, such as rotor 55, the load will exert a moment about the pivot 13a of main boom 14. This moment is counteracted by the action of counterbalancing cable 24 in cooperation with the first control cable 29, as well as the counterweight 32, thereby providing moment equilibrium to main boom 14. It is clear that by providing support means 20, the typical moments will be much lower than in the state of the art lifting device which has its pivot typically at deck level. When main boom 14 and also additional boom 16 are brought in a more inclined position, the moment about pivot 13a will decrease. As a result the counterbalancing forces in counterbalancing cable 24 and control cable 29 will also decrease, and eventually become about zero. In this position, counterbalancing cable 24 may be disconnected from platform 1. With main boom 14 and boom 16 in the maximally inclined orientation, the first part of lifting device 10 may be rotated about the axis 12 to another desired position, e.g. by 180°. After reconnecting counterbalancing cable 24 in the new position to platform 1, booms 16 and/or 14 may be lowered to position rotor 55 on the semi-finished wind turbine 100. During lowering of the booms, the counterbalancing forces in counterbalancing cable 24 and control cable 29 will of course increase again. This increase will be less however than when using the known lifting device.

Another substantial advantage of the platform according to the invention is that it can be provided with lifting device 10 at shore, and then easily transported to the site at sea for servicing or building. For transport, the lifting device is provided in a configuration, as shown in figure 2. The offshore platform 1 according to the invention is sailed to its destination with the legs 3 in a position other than the lower position thereof. In figure 2, legs 3 are in their upper position, in which legs 3 extend far above the water level 100 and above the work deck 2, which is preferred for speed. The support structure 20 and the first pivotable part of the lifting device, which comprises booms (14, 15, 16), are firmly fixated to the platform 1 by counteracting cable 24 and transport cable 25, provided for this purpose. Counteracting cable is attached to platform 1 at its end 24a, for instance with a hook-eye connection, and to frame 13 at its other end 24b. Transport cable 25 is at one end 25a connected to the holding means 17 for a load, and with its other end 25b to platform 1, for instance also by a hook-eye connection. For transport, cables 24 and 25 are stressed under control of the control system to firmly hold the lifting device 10 onto platform 1. In this configuration, platform 1 is preferably sailed to its destination, for instance using a pusher.

The invention is not limited to the embodiments shown in figures 1 and 2, and many variations are possible within the scope of the claims attached hereto.

## Claims

1. A jack-up offshore platform (1), comprising a work deck (2) and a lifting device (10) for lifting a load (55) from the work deck (2), the lifting device (10) comprising a main boom (14) for manipulating the load (55), which main boom (14) is pivotally connected to support means (20) at a pivot (13a), the support means (20) being provided to bring the pivot (13a) in an elevated position with respect to the work deck (2).

2. A jack-up offshore platform according to claim 1, **characterized in that** the elevated position is at least 10 m above the work deck of the platform.

3. A jack-up offshore platform according to claim 2, **characterized in that** the elevated position is at least 40 m above the work deck of the platform.

4. A jack-up offshore platform according to any one of the preceding claims, **characterized in that** the height of the elevated position above the work deck of the platform ranges from 20 to 80 % of the total height of the lifting device in its highest position.

5. A jack-up offshore platform according to claim 4, **characterized in that** the height of the elevated position above the work deck of the platform ranges from 40 to 60% of the total height of the lifting device in its highest position.

6. A jack-up offshore platform according to any one of the preceding claims, **characterized in that** the support means comprise a static support structure, preferably provided on the work deck of the platform.

7. A jack-up offshore platform according to claim 6, **characterized in that** the support structure comprises a truss framework.

8. A jack-up offshore platform according to any one of the preceding claims, **characterized in that** the lifting device comprises counterbalancing means (24) that are connectable to the platform and/or the support means.

9. A jack-up offshore platform according to any of the preceding claims, **characterized in that** the counterbalancing means are connectable to the platform nearby edges of the jack-up offshore platform.

10. A jack-up offshore platform according to any of the preceding claims, **characterized in that** the lifting device comprises at least one sensor for detecting forces and control means for counterbalancing the load such that the lifting device remains in equilibrium, on the basis of the outcome of the detected forces.

11. A jack-up offshore platform according to any of the preceding claims, **characterized in that** the lifting device is suitable for lifting loads to a height between 50 and 150 meter, preferably between 60 and 130 meter and most preferably between 70 and 110 meter above the work deck of the jack-up offshore platform.

12. Use of a jack-up offshore platform according to any one of claims 1 - 11 for assembling and servicing a structure at sea.
